(19) Europäisches Patentamt
European Patent Office
Office européen des brevets

(11) EP 3 762 441 B1

(12) # EUROPÄISCHE PATENTSCHRIFT

(45) Veröffentlichungstag und Bekanntmachung des Hinweises auf die Patenterteilung:
**13.04.2022 Patentblatt 2022/15**

(21) Anmeldenummer: **19707034.5**

(22) Anmeldetag: **04.03.2019**

(51) Internationale Patentklassifikation (IPC):
***C08G 18/76*** *(2006.01)* ***C08G 18/16*** *(2006.01)*
***C08G 18/18*** *(2006.01)* ***C08G 18/24*** *(2006.01)*
***C08G 18/32*** *(2006.01)* ***C08G 18/44*** *(2006.01)*
***C08G 101/00*** *(2006.01)*

(52) Gemeinsame Patentklassifikation (CPC):
**C08G 18/7621; C08G 18/165; C08G 18/1833; C08G 18/185; C08G 18/244; C08G 18/3215; C08G 18/44;** C08G 2110/0008; C08G 2110/005; C08G 2110/0083

(86) Internationale Anmeldenummer:
**PCT/EP2019/055284**

(87) Internationale Veröffentlichungsnummer:
**WO 2019/170590 (12.09.2019 Gazette 2019/37)**

(54) **POLYURETHANSCHAUMSTOFFE BASIEREND AUF POLYETHERCARBONATPOLYOLEN**
POLYURETHANE FOAMS BASED ON POLYETHER CARBONATE POLYOLS
MOUSSES DE POLYURÉTHANE À BASE DE POLYÉTHER CARBONATES POLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2018 EP 18160391**
**15.08.2018 EP 18189170**

(43) Veröffentlichungstag der Anmeldung:
**13.01.2021 Patentblatt 2021/02**

(73) Patentinhaber: **Covestro Intellectual Property GmbH & Co. KG**
**51373 Leverkusen (DE)**

(72) Erfinder:
- **HILKEN, Persefoni**
  **51373 Leverkusen (DE)**
- **LINDNER, Stefan**
  **42857 Remscheid (DE)**

(74) Vertreter: **Levpat**
**c/o Covestro AG**
**Gebäude 4825**
**51365 Leverkusen (DE)**

(56) Entgegenhaltungen:
**WO-A1-2017/097729**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyurethanschaumstoffen, vorzugsweise von Polyurethanweichschaumstoffen, durch Reaktion einer Isocyanat-Komponente mit einer gegenüber Isocyanaten reaktiven Komponente, die mindestens ein Polyethercarbonatpolyol umfasst, und wobei die Umsetzung in Gegenwart einer Komponente K erfolgt, die im weiteren näher beschrieben wird. Die Erfindung betrifft weiterhin durch das erfindungsgemäße Verfahren hergestellte Polyurethanschaumstoffe und deren Verwendung.

Im Rahmen einer umweltfreundlichen Ausrichtung von Produktionsprozessen ist es generell wünschenswert, $CO_2$-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im Folgenden auch als cPC bezeichnet, oder für R = H Ethylencarbonat, im Folgenden auch als cEC bezeichnet).

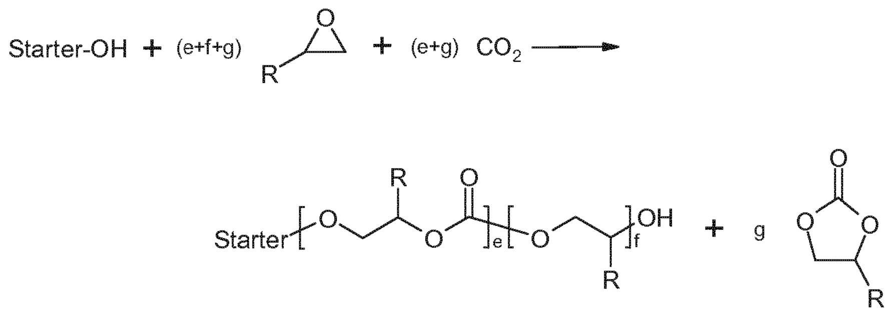

(I)

Die Herstellung von Polyurethanschaumstoffen auf Basis von Polyethercarbonatpolyolen und Isocyanaten ist bekannt (z.B. WO 2012/130760 A1, EP-A 0 222 453). Es wurde festgestellt, dass bei der Verwendung von Polyethercarbonatpolyolen zur Herstellung von Polyurethanschaumstoffen die resultierenden Produkte cyclisches Propylencarbonat enthalten, welches beispielsweise durch Emissionsmessungen am Polyurethanweichschaumstoff nachgewiesen werden kann.

In WO 2017/097729 A1 wird beschrieben, dass durch den Einsatz von Estern von ein- oder mehrbasigen Carbonsäuren, deren (erste) Dissoziation einen pKs-Wert von 0,5 bis 4,0 aufweist, als Additive beim Verschäumen von Polyurethanschäumen eine Verringerung der Emission von cyclischem Propylencarbonat beobachtet werden kann.

Die Aufgabe der vorliegenden Erfindung bestand darin, ein Verfahren zur Herstellung von Polyurethanschaumstoffen bereitzustellen, welches zu Polyurethanschaumstoffen mit einer reduzierten Emission von cyclischem Propylencarbonat führt.

Überraschenderweise wurde diese Aufgabe gelöst durch ein Verfahren zur Herstellung von Polyurethanschaumstoffen durch Umsetzung der Komponenten

A Polyolkomponente, enthaltend

A1 40 bis 100 Gew.-Teile Polyethercarbonatpolyol mit einer Hydroxylzahl gemäß DIN 53240-1 von Juni 2013 von 20 mg KOH/g bis 120 mg KOH/g

A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,

B

B1 Katalysator, und
B2 gegebenenfalls Hilfs- und Zusatzstoffe,

C Wasser und/oder physikalische Treibmittel,
mit
D Di- und/oder Polyisocyanaten,

wobei die Herstellung bei einer Kennzahl von 90 bis 120 und in Gegenwart einer Komponente K erfolgt, dadurch gekennzeichnet, dass die Komponente K ausgewählt ist aus mindestens einer Verbindung der folgenden Formeln

$$(R_1)(R_2)X\text{-}C(O)\text{-}(Y)_m\text{-}Z \quad (1)$$

$$[(R_1)(R_2)X\text{-}C(O)\text{-}N(H)\text{-}N(H)\text{-}C(O)\text{-}R_3\text{-}]_2 \quad (2)$$

$$[(R_1)(R_2)X\text{-}R_3\text{-}C(O)\text{-}N(H)\text{-}]_2 \quad (3)$$

wobei

m für 0 oder 1, bevorzugt 1 steht,

X für eine Hydroxyphenylgruppe steht,

Y für -N(H)-, -O-, -O-$R_4$- oder $C_1$- bis $C_6$-Alkylen, bevorzugt -N(H)- steht,

Z für H, eine substituierte oder unsubstituierte Arylgruppe oder eine substituierte oder unsubstituierte Heteroarylgruppe steht, wobei Z nicht für H steht wenn Y für - O- steht,

$R_1$, $R_2$ jeweils für H, Hydroxyl, eine substituierte oder unsubstituierte $C_1$- bis $C_6$-Alkylgruppe oder -O-$R_5$ stehen,

$R_3$ für eine substituierte oder unsubstituierte $C_1$- bis $C_{12}$-Alkylengruppe, eine substituierte oder unsubstituierte $C_1$- bis $C_{12}$-Alkenylengruppe steht,

$R_4$ für eine substituierte oder unsubstituierte $C_1$- bis $C_6$-Alkylengruppe steht,

$R_5$ für eine substituierte oder unsubstituierte $C_1$- bis $C_{12}$-Alkylgruppe steht,

und die Komponente K in einer Menge von 0,05 bis 10,00 Gew.-Teile eingesetzt wird, bezogen auf die Summe der Gewichtsteile der Komponenten A1 + A2 = 100 Gewichtsteile. enthält.

Bevorzugter Gegenstand der Erfindung ist ein Verfahren zur Herstellung von Polyurethanschaumstoffen, vorzugsweise von Polyurethanweichschaumstoffen, durch Umsetzung von

A1 40 bis 100 Gew.-Teile, bevorzugt 60 bis 100 Gew.-Teile, besonders bevorzugt 80 bis 100 Gew.-Teile eines oder mehrerer Polyethercarbonatpolyole mit einer Hydroxylzahl gemäß DIN 53240-1 von Juni 2013 von 20 mg KOH/g bis 120 mg KOH/g,
A2 0 bis 60 Gew.-Teile, bevorzugt 0 bis 40 Gew.-Teile, besonders bevorzugt 0 bis 20 Gew.-Teile eines oder mehrerer Polyetherpolyole mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei die Polyetherpolyole A2 frei von Carbonateinheiten sind,
A3 0 bis 20 Gew.-Teilen, bezogen auf die Summe der Gew.-Teile der Komponenten A1 und A2, eines oder mehrerer Polyetherpolyole mit einer Hydroxylzahl gemäß DIN 53240-1 von Juni 2013 20 mg KOH/g bis 250 mg KOH/g, und einem Gehalt an Ethylenoxid von > 60 Gew.-%, wobei die Polyetherpolyole A3 frei von Carbonateinheiten sind,
A4 0 bis 40 Gew.-Teilen, bezogen auf die Summe der Gew.-Teile der Komponenten A1 und A2, eines oder mehrerer Polymerpolyole, PHD-Polyole und/oder PIPA-Polyole,
A5 0 bis 40 Gew.-Teilen, bezogen auf die Summe der Gew.-Teile der Komponenten A1 und A2, Polyole, die nicht unter die Definition der Komponenten A1 bis A4 fallen,

B

B1 Katalysator, und
B2 gegebenenfalls Hilfs- und Zusatzstoffen

C Wasser und/oder physikalischen Treibmitteln,
mit
D Di und/oder Polyisocyanaten,

wobei die Herstellung bei einer Kennzahl von 90 bis 120 erfolgt, und
wobei die Angaben der Gewichtsteile der Komponenten A3, A4 und A5 jeweils bezogen sind auf die Summe der Gewichtsteile A1 + A2 = 100 Gewichtsteile.

Die Komponenten A1 bis A5 beziehen sich jeweils auf "eine oder mehrere" der genannten Verbindungen. Bei Verwendung mehrerer Verbindungen einer Komponente entspricht die Mengenangabe der Summe der Gewichtsteile der Verbindungen.

In einer besonders bevorzugten Ausführungsform enthält Komponente A

A1 65 bis 75 Gew.-Teile, höchst bevorzugt 68 bis 72 Gew.-Teile eines oder mehrerer Polyethercarbonatpolyole mit einer Hydroxylzahl gemäß DIN 53240-1 von Juni 2013 von 20 mg KOH/g bis 120 mg KOH/g sowie vorzugsweise einem CO2-Gehalt von 15 bis 25 Gew.-%, und
A2 25 bis 35 Gew.-Teile, höchst bevorzugt 28 bis 32 Gew.-Teile eines oder mehrerer Polyetherpolyole mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei die Polyetherpolyole A2 frei von Carbonateinheiten sind,

wobei die Komponente A vorzugsweise frei ist von Komponente A3 und/oder A4.

In einer anderen Ausführungsform umfasst Komponente A

A1 65 bis 75 Gew.-Teile, bevorzugt 68 bis 72 Gew.-Teile eines oder mehrerer Polyethercarbonatpolyole mit einer Hydroxylzahl gemäß DIN 53240-1 von Juni 2013 von 20 mg KOH/g bis 120 mg KOH/g sowie vorzugsweise einem $CO_2$-Gehalt von 15 bis 25 Gew.-%, und
A2 25 bis 35 Gew.-Teile, bevorzugt 28 bis 32 Gew.-Teile eines oder mehrerer Polyetherpolyole mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei die Polyetherpolyole A2 frei von Carbonateinheiten sind,
A3 2 bis 20 Gew.-Teile, bevorzugt 2 bis 10 Gew.-Teile, bezogen auf die Summe der Gew.-Teile der Komponenten A1 und A2, eines oder mehrerer Polyetherpolyole mit einer Hydroxylzahl gemäß DIN 53240-1 von Juni 2013 20 mg KOH/g bis 250 mg KOH/g, und einem Gehalt an Ethylenoxid von > 60 Gew.-%, wobei die Polyetherpolyole A3 frei von Carbonateinheiten sind,

wobei die Komponente A vorzugsweise frei ist von Komponente A4.

In einer weiteren Ausführungsform umfasst Komponente A

A1 40 bis 100 Gew.-Teile, bevorzugt 60 bis 100 Gew.-Teile, besonders bevorzugt 80 bis 100 Gew.-Teile, höchst bevorzugt 65 bis 75 Gew.-Teile eines oder mehrerer Polyethercarbonatpolyole mit einer Hydroxylzahl gemäß DIN 53240-1 von Juni 2013 von 20 mg KOH/g bis 120 mg KOH/g sowie vorzugsweise einem $CO_2$-Gehalt von 15 bis 25 Gew.-%, und
A2 0 bis 60 Gew.-Teile, bevorzugt 0 bis 40 Gew.-Teile, besonders bevorzugt 0 bis 20 Gew.-Teile, höchst bevorzugt 25 bis 35 Gew.-Teile eines oder mehrerer Polyetherpolyole mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei die Polyetherpolyole A2 frei von Carbonateinheiten sind,
A4 0,01 bis 40,00 Gew.-Teile, bevorzugt 0,01 bis 20,00 Gew.-Teile, besonders bevorzugt 1,00 bis 20,00 Gew.-Teile, höchst bevorzugt 2,00 bis 20,00 Gew.-Teile, bezogen auf die Summe der Gew.-Teile der Komponenten A1 und A2, eines oder mehrerer Polymerpolyole, PHD-Polyole und/oder PIPA-Polyole,
A5 0 bis 40 Gew.-Teilen, bezogen auf die Summe der Gew.-Teile der Komponenten A1 und A2, Polyole, die nicht unter die Definition der Komponenten A1 bis A4 fallen,

wobei die Komponente A vorzugsweise frei ist von Komponente A3.

Dabei sind die angegebenen Bereiche und Vorzugsbereiche der Komponenten A1, A2, A4 und A5 miteinander frei kombinierbar.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240-1 von Juni 2013 von 20 mg KOH/g bis 120 mg KOH/g, vorzugsweise von 20 mg KOH/g bis 100 mg KOH/g, besonders bevorzugt von 25 mg KOH/g bis 90 mg KOH/g, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist. Bevorzugt umfasst Komponente A1 ein Polyethercarbonatpolyol, welches erhältlich ist durch Copolymerisation von 2 Gew.-% bis 30 Gew.-% Kohlendioxid und 70 Gew.-% bis 98 Gew.-% einem oder mehreren Alkylenoxiden, in Gegenwart eines oder mehrerer H-funktioneller Startermoleküle mit einer durchschnittlichen Funktionalität von 1 bis 6, bevorzugt von 1 bis 4, besonders bevorzugt von 2 bis 3. Unter "H-funktionell" wird im Sinne der Erfindung eine Starterverbindung verstanden, die gegenüber Alkoxylierung aktive H-Atome aufweist. Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (II) schematisch dargestellt wird. In dem Schema gemäß Formel (II) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (II) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (II) gezeigte Polyethercarbonatpolyol beschränkt ist. In Bezug auf Formel (II) bedeutet dies, dass das Verhältnis von e/f bevorzugt von 2 : 1 bis 1 : 20, besonders bevorzugt von 1,5 : 1 bis 1 : 10 beträgt.

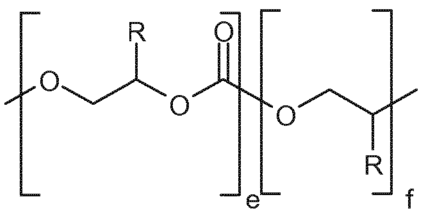

(II)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit dl: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm;
Polyetherpolyol (d.h. ohne eingebautes Kohlendioxid) mit Resonanzen bei 1,2 bis 1,0 ppm; das als Startermolekül (soweit vorhanden) eingebaute 1,8-Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (III) berechnet,

$$LC' = \frac{[F(5,1-4,8) - F(4,5)] * 102}{N} * 100\% \qquad \text{(III)}$$

wobei sich der Wert für N ("Nenner" N) nach Formel (IV) berechnet:

$$N = [F(5,1-4,8) - F(4,5)]*102 + F(4,5)*102 + F(2,4)*58 + 0,33*F(1,2-1,0)*58 + 0,25*F(1,6-1,52)*146 \quad (IV)$$

Dabei gelten folgende Abkürzungen:

F(4,5) = Fläche der Resonanz bei 4,5 ppm für cyclisches Carbonat (entspricht einem H Atom) F(5,1-4,8) = Fläche der Resonanz bei 5,1 bis 4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2 bis 1,0 ppm für Polyetherpolyol
F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).
Der Gewichtsanteil (in Gew.-%) an cyclischem Carbonat (CC') in der Reaktionsmischung wurde nach Formel (V) berechnet,

$$CC' = \frac{F(4,5)*102}{N} * 100\% \quad (V)$$

wobei sich der Wert für N nach Formel (IV) berechnet.
Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).
Beispielsweise umfasst die Herstellung von Polyethercarbonatpolyolen gemäß A1:

(a) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,
($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,
($\gamma$) ein oder mehrere der Alkylenoxide und Kohlendioxid zu der aus Schritt ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldietlioxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei 0 bis 90 Gew.-%, bevorzugt bei 0 bis 50 Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofüranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol

1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (VI),

$$HO-(CH_2)_x-OH \qquad (VI),$$

wobei x eine Zahl von 1 bis 20, bevorzugt eine gerade Zahl von 2 bis 20 ist. Beispiele für Alkohole gemäß Formel (VI) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VI) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt. Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von 2 bis 3.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt. DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt. In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von 2,0 und 30,0 Gew.-%, bevorzugt von 5,0 und 28,0 Gew.-% und besonders bevorzugt von 10,0 und 25,0 Gew.-% auf.

In einer weiteren Ausführungsform des erfindungsgemäßen Verfahrens weisen das oder die Polyethercarbonatpolyole gemäß A1 eine Hydroxylzahl von 20 mg KOH/g bis 250 mg KOH/g auf und sind erhältlich durch Copolymerisation von 2,0 Gew.-% bis 30,0 Gew.-% Kohlendioxid und 70 Gew.-% bis 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240-1 von Juni 2013 bestimmt werden.

In einer weiteren Ausführungsform wird ein Polyethercarbonatpolyol A1 eingesetzt, enthaltend Blöcke gemäß Formel (II) wobei das Verhältnis e/f von 2 : 1 bis 1 : 20 beträgt.

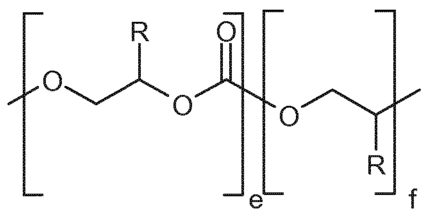

(II)

In einer weiteren Ausführungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240-1 von Juni 2013 von 20 mg KOH/g bis 250 mg KOH/g, vorzugsweise von 20 bis 112 mg KOH/g und besonders bevorzugt 20 mg KOH/g bis 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von 2 bis 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder

Sorbitol eingesetzt.

Die Polyetherpolyole gemäß A2 weisen einen Gehalt von 0 bis 60 Gew.-%, vorzugsweise von 0 bis 40 Gew.-%, besonders bevorzugt 0 bis 25 Gew.-% an Ethylenoxid auf.

Komponente A3

Die Komponente A3 umfasst Polyetherpolyole mit einer Hydroxylzahl gemäß DIN 53240-1 von Juni 2013 20 mg KOH/g bis 250 mg KOH/g, vorzugsweise von 20 bis 112 mg KOH/g und besonders bevorzugt 20 mg KOH/g bis 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von 3 bis 6, besonders bevorzugt von 3 aufweisen, so dass Polyethertriole entstehen. Bevorzugte H-funktionelle Starterverbindungen mit einer Funktionalität von 3 sind Glycerin und/oder Trimethylolpropan, besonders bevorzugt ist Glycerin.

In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole.

Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.

PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifünktionellen Starters (wie beispielsweise Glycerin und/oder Trimethylolpropan), im Falle des Polyethercarbonatpolyols in Gegenwart von Kohlendioxid. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyether(carbonat)polyol eine Funktionalität von 2,5 bis 4,0 und eine Hydroxylzahl von 3 mg KOH/g bis 112 mg KOH/g (Molekulargewicht 500 bis 18000 g/mol) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B

Als Katalysatoren gemäß der Komponente B1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder

b) Zinn(II)-Salze von Carbonsäuren eingesetzt.

Es werden insbesondere die Zinn(II)-Salze von Carbonsäuren eingesetzt, wobei die jeweils zugrundeliegende Carbonsäure von 2 bis 24 Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.

In einer bevorzugten Ausführungsform der Erfindung wird mindestens ein Zinn(II)-Salz der Formel (VII)

$$Sn(C_xH_{2x+1}COO)_2 \qquad (VII)$$

eingesetzt, wobei x eine ganze Zahl von 8 bis 24, bevorzugt 10 bis 20, besonders bevorzugt von 12 bis 18 bedeutet. Besonders bevorzugt ist in Formel (VII) die Alkylkette $C_xH_{2x+1}$ des Carboxylats eine verzweigte Kohlenstoffkette, d.h. $C_xH_{2x+1}$ ist eine *iso*-Alkylgruppe.

Höchst bevorzugt werden als Zinn(II)-Salze von Carbonsäuren eine oder mehrere Verbindungen ausgewählt aus der Gruppe bestehend aus Zinn(II)-Salz der 2-Butyloctansäure, d.h. Zinn(II)-(2-butyloctoat), Zinn(II)-Salz der Ricinolsäure, d.h. Zinn(II)-ricinoleat und Zinn(II)-Salz der 2-Hexyldecansäure, d.h. Zinn(II)-(2-hexyldecanoat) eingesetzt.

In einer anderen bevorzugten Ausführungsform der Erfindung wird als Komponente B1

B1.1 0,05 bis 1,50 Gew.-Teilen, bezogen auf die Summe der Gew.-Teile der Komponenten A1 und A2, Harnstoff und/oder Derivate des Harnstoffs und

B1.2 0,03 bis 1,50 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf,

eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von 0,05 bis 1,50 Gew.-Teilen, bevorzugt von 0,10 bis 0,50 Gew.-Teilen, besonders bevorzugt von 0,25 bis 0,35 Gew.-Teilen, bezogen auf die Summe der Gew.-Teile der Komponenten A1 bis A2, eingesetzt.

Die Komponente B1.2 wird in Mengen von 0,03 bis 1,50 Gew.-Teilen, bevorzugt 0,03 bis 0,50 Gew.-Teilen, besonders bevorzugt von 0,10 bis 0,30 Gew.-Teilen, ganz besonders bevorzugt von 0,20 bis 0,30 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren.

Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Zu den in B1.2 genannten "aminischen Katalysatoren" gehören nicht Harnstoff oder seine Derivate. Gegenstand der Erfindung ist daher auch ein Verfahren zur Herstellung von Polyurethanschaumstoffen durch Umsetzung der Komponenten

A Polyolkomponente, enthaltend

A1 40 bis 100 Gew.-Teile Polyethercarbonatpolyol mit einer Hydroxylzahl gemäß DIN 53240-1 von Juni 2013

von 20 mg KOH/g bis 120 mg KOH/g,
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,

im nicht-alkalischen Medium mit
C Wasser und/oder physikalischen Treibmitteln und
D Di und/oder Polyisocyanaten,

wobei die Herstellung bei einer Kennzahl von 90 bis 120 und in Gegenwart einer Komponente K erfolgt.

Das nicht-alkalische Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Daher ist ein bevorzugter Gegenstand der Erfindung ein Verfahren zur Herstellung von Polyurethanschaumstoffen, dadurch gekennzeichnet, dass

A Polyolkomponente, enthaltend

A1 40 bis 100 Gew.-Teile Polyethercarbonatpolyol mit einer Hydroxylzahl gemäß DIN 53240-1 von Juni 2013 von 20 mg KOH/g bis 120 mg KOH/g,
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,

B1 in Gegenwart von Harnstoff und/oder Derivaten des Harnstoffs und in Abwesenheit aminischer Katalysatoren mit
C Wasser und/oder physikalischen Treibmitteln und
D Di und/oder Polyisocyanaten,

im nicht-alkalischen Medium umgesetzt werden, wobei die Herstellung bei einer Kennzahl von 90 bis 120 und in Gegenwart einer Komponente K erfolgt.

Als Komponente B2 werden Hilfs- und Zusatzstoffe eingesetzt, wie

a) oberflächenaktive Zusatzstoffe, wie Emulgatoren und Schaumstabilisatoren insbesondere solche mit niedriger Emission wie beispielsweise Produkte der Tegostab® LF2-Serie
b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104 - 127 beschrieben.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 - 136, beschrieben werden, beispielsweise solche der Formel (IX)

$Q(NCO)_n$ (IX),

wobei

n für 2 - 4, vorzugsweise 2 - 3, und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die Isocyanat-Komponente B ein Toluylendiisocyanat-Isomerengemisch aus 55 bis 90 Gew.-% 2,4- und 10 bis 45 Gew.-% 2,6-TDI.

In einer weiteren Ausführungsform des erfindungsgemäßen Verfahrens umfasst die Isocyanat-Komponente D 100 Gew.-% 2,4- Toluylendiisocyanat.

In einer Ausführungsform des erfindungsgemäßen Verfahrens beträgt die Kennzahl 90 bis 120. Vorzugsweise liegt die Kennzahl in einem Bereich von 100 bis 115, besonders bevorzugt 102 bis 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

Kennzahl = (Isocyanat-Menge eingesetzt) : (Isocyanat-Menge berechnet) • 100 (XII)

Komponente K

Komponente K ist erfindungsgemäß ausgewählt aus mindestens einer Verbindung der folgenden Formeln

$(R_1)(R_2)X\text{-}C(O)\text{-}(Y)_m\text{-}Z$ (1)

$[(R_1)(R_2)X\text{-}C(O)\text{-}N(H)\text{-}N(H)\text{-}C(O)\text{-}R_3\text{-}]_2$ (2)

$[(R_1)(R_2)X\text{-}R_3\text{-}C(O)\text{-}N(H)\text{-}]_2$ (3)

wobei

m für 0 oder 1, bevorzugt 1 steht,
X für eine Hydroxyphenylgruppe steht,
Y für -N(H)-, -O-, $-O-R_4-$ oder $C_1$- bis $C_6$-Alkylen, bevorzugt -N(H)- steht,
Z für H, eine substituierte oder unsubstituierte Arylgruppe oder eine substituierte oder unsubstituierte Heteroarylgruppe steht, wobei Z nicht für H steht wenn Y für-O- steht,
$R_1$, $R_2$ jeweils für H, Hydroxyl, eine substituierte oder unsubstituierte $C_1$- bis $C_6$-Alkylgruppe oder $-O-R_5$ stehen,
$R_3$ für eine substituierte oder unsubstituierte $C_1$- bis $C_{12}$-Alkylengruppe, eine substituierte oder unsubstituierte $C_1$- bis $C_{12}$-Alkenylengruppe steht,
$R_4$ für eine substituierte oder unsubstituierte $C_1$- bis $C_6$-Alkylengruppe steht,
$R_5$ für eine substituierte oder unsubstituierte $C_1$- bis $C_{12}$-Alkylgruppe steht.

Als eine Verbindung gemäß Formel (1) können beispielsweise 3-(Salicyloylamino)-1,2,4-triazol, 2,2'-Dihydroxy-4-methoxy-benzophenon, Salicylamid oder 2-Hydroxy-4-octyloxybenzophenon. Bevorzugt wird eine Verbindung gemäß Formel (1)

$$(R_1)(R_2)X\text{-}C(O)\text{-}(Y)_m\text{-}Z \qquad (1)$$

wobei

| | |
|---|---|
| m | für 1 steht, |
| X | für eine Hydroxyphenylgruppe steht, |
| Y | für -N(H)- steht, |
| Z | für H, eine substituierte oder unsubstituierte Arylgruppe oder eine substituierte oder unsubstituierte Heteroarylgruppe steht |
| $R_1$, $R_2$ | jeweils für H, Hydroxyl oder eine substituierte oder unsubstituierte C1- bis C6-Alkylgruppe stehen. |

Für Verbindungen gemäß Formel (2) können beispielsweise N,N-Dodecanedioyl-N,N-bis(2-hydroxybenzoyl)hydrazid oder 1,1'-Maleoyl-bis[2-(2-hydroxy-5-octylbenzoyl)hydrazin] eingesetzt werden. Bevorzugt wird N,N-Dodecanedioyl-N,N-bis(2-hydroxybenzoyl)hydrazid eingesetzt.

Für Verbindungen gemäß Formel (3) können beispielsweise 1,2-Bis(3,5-di-tert-butyl-4-hydroxyhydrocinnamoyl)hydrazin, 2-[3-(4-hydroxyphenyl)-1-oxopropyl]hydiazid oder 1,2-Bis(3,5-di-tert-butyl-4-hydroxycinnamoyl)hydrazin eingesetzt werden. Bevorzugt wird 1,2-Bis(3,5-di-tert-butyl-4-hydroxyhydrocinnamoyl)hydrazin eingesetzt.

Insbesondere bevorzugt ist die Komponente K mindestens eine Verbindung ausgewählt aus der Gruppe bestehend aus 3-(Salicyloylamino)-1,2,4-triazol, Salicylamid, N,N-Dodecanedioyl-N,N-bis(2-hydroxybenzoyl)hydrazid und 1,2-Bis(3,5-di-tert-butyl-4-hydroxyhydrocinnamoyl)hydrazin. Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.

Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

Die erfindungsgemäßen Weichschäume weisen eine Rohdichte gemäß DIN EN ISO 3386-1-98 im Bereich von 16 bis 60 $kg/m^3$, bevorzugt 20 bis 50 $kg/m^3$ auf.

In einer ersten Ausführungsform betrifft die Erfindung ein Verfahren zur Herstellung von Polyurethanschaumstoffen durch Umsetzung der Komponenten

A Polyolkomponente, enthaltend

A1 40 bis 100 Gew.-Teile Polyethercarbonatpolyol mit einer Hydroxylzahl gemäß DIN 53240-1 von Juni 2013 von 20 mg KOH/g bis 120 mg KOH/g,
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,

B

B1 Katalysator, und
B2 gegebenenfalls Hilfs- und Zusatzstoffe,

C Wasser und/oder physikalische Treibmittel,
mit
D Di- und/oder Polyisocyanaten,

wobei die Herstellung bei einer Kennzahl von 90 bis 120 und in Gegenwart einer Komponente K erfolgt,
dadurch gekennzeichnet, dass die Komponente K ausgewählt ist aus mindestens einer Verbindung der folgenden Formeln

$$(R_1)(R_2)X\text{-}C(O)\text{-}(Y)_m\text{-}Z \quad (1)$$

$$[(R_1)(R_2)X\text{-}C(O)\text{-}N(H)\text{-}N(H)\text{-}C(O)\text{-}R_3\text{-}]_2 \quad (2)$$

$$[(R_1)(R_2)X\text{-}R_3\text{-}C(O)\text{-}N(H)\text{-}]_2 \quad (3)$$

wobei

m für 0 oder 1 steht,
X für eine Hydroxyphenylgruppe steht,
Y für -N(H)-, -O-, -O-$R_4$- oder $C_1$- bis $C_6$-Alkylen steht,
Z für H, eine substituierte oder unsubstituierte Arylgruppe oder eine substituierte oder unsubstituierte Heteroarylgruppe steht, wobei Z nicht für H steht wenn Y für-O- steht,
$R_1$, $R_2$ jeweils für H, Hydroxyl, eine substituierte oder unsubstituierte $C_1$- bis $C_6$-Alkylgruppe oder -O-$R_5$ stehen,
$R_3$ für eine substituierte oder unsubstituierte $C_1$- bis $C_{12}$-Alkylengruppe, eine substituierte oder unsubstituierte $C_1$- bis $C_{12}$-Alkenylengruppe steht,
$R_4$ für eine substituierte oder unsubstituierte $C_1$- bis $C_6$-Alkylengruppe steht,
$R_5$ für eine substituierte oder unsubstituierte $C_1$- bis $C_{12}$-Alkylgruppe steht und die Komponente K in einer Menge von 0,05 bis 10,00 Gew.-Teile eingesetzt wird,

bezogen auf die Summe der Gewichtsteile der Komponenten A1 + A2 = 100 Gewichtsteile.

In einer zweiten Ausführungsform betrifft die Erfindung ein Verfahren gemäß der ersten Ausführungsform, dadurch gekennzeichnet, dass Komponente A die folgende Zusammensetzung aufweist:

A1 40 bis 100 Gew.-Teile Polyethercarbonatpolyol mit einer Hydroxylzahl gemäß DIN 53240-1 von Juni 2013 von 20 mg KOH/g bis 120 mg KOH/g,
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,
A3 0 bis 20 Gew.-Teile, bezogen auf die Summe der Gew.-Teile der Komponenten A1 und A2, Polyetherpolyol mit einer Hydroxylzahl gemäß DIN 53240-1 von Juni 2013 20 mg KOH/g bis 250 mg KOH/g, und einem Gehalt an Ethylenoxid von > 60 Gew.-%, wobei Polyetherpolyol A3 frei von Carbonateinheiten ist,
A4 0 bis 40 Gew.-Teile, bezogen auf die Summe der Gew.-Teile der Komponenten A1 und A2, Polymerpolyol, PHD-Polyol und/oder PIPA-Polyol,
A5 0 bis 40 Gew.-Teile, bezogen auf die Summe der Gew.-Teile der Komponenten A1 und A2, Polyol, welches nicht unter die Definition der Komponenten A1 bis A4 fällt,

wobei die Angabe der Gewichtsteile der Komponenten A3, A4 und A5 jeweils bezogen sind auf die Summe der Gewichtsteile der Komponenten A1 + A2 = 100 Gewichtsteile.

In einer dritten Ausführungsform betrifft die Erfindung ein Verfahren gemäß der ersten oder zweiten Ausfuhrungsform, dadurch gekennzeichnet, dass Komponente A frei ist von Komponenten A3 und/oder A4.

In einer vierten Ausführungsform betrifft die Erfindung ein Verfahren gemäß einer der Ausführungsformen 1 bis 3, dadurch gekennzeichnet, dass Komponente A umfasst:

A1 65 bis 75 Gew.-Teile Polyethercarbonatpolyol mit einer Hydroxylzahl gemäß DIN 53240-1 von Juni 2013 von 20 mg KOH/g bis 120 mg KOH/g, und
A2 25 bis 35 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist.

In einer fünften Ausführungsform betrifft die Erfindung ein Verfahren gemäß einer der Ausführungsformen 1 bis 4, dadurch gekennzeichnet, dass Komponente A1 ein Polyethercarbonatpolyol umfasst, welches erhältlich ist durch Copolymerisation von Kohlendioxid und Alkylenoxid in Gegenwart H-funktioneller Startermoleküle, wobei das Polyethercarbonatpolyol vorzugsweise einen $CO_2$-Gehalt von 15 bis 25 Gew.-% aufweist.

In einer sechsten Ausführungsform betrifft die Erfindung ein Verfahren gemäß einer der Ausführungsformen 1 bis 5, dadurch gekennzeichnet, dass als Komponente B

B1 Katalysator ausgewählt aus einem oder mehreren der folgenden Verbindungen

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe

eingesetzt werden.
In einer siebten Ausführungsform betrifft die Erfindung ein Verfahren gemäß einer der Ausführungsformen 1 bis 5, dadurch gekennzeichnet, dass als Komponente B

B1 Katalysator und
B2 gegebenenfalls Hilfs- und Zusatzstoffe

eingesetzt werden,
wobei als Komponente B1

B1.1 0,05 bis 1,50 Gew.-Teilen, bezogen auf die Summe der Gew.-Teile der Komponenten A1 und A2, Harnstoff und/oder Derivate des Harnstoffs und
B1.2 0,03 bis 1,50 Gew.-Teilen, bezogen auf die Summe der Gew.-Teile der Komponenten A1 und A2, anderer Katalysator als die der Komponente B1.2, wobei der Gehalt an aminischen Katalysator in der Komponente B1.2 maximal 50 Gew.-% bezogen auf Komponente B1 betragen darf,

eingesetzt wird.
In einer achten Ausführungsform betrifft die Erfindung ein Verfahren gemäß einer der Ausführungsformen 1 bis 7, dadurch gekennzeichnet, dass Komponente D 2,4- und/oder 2,6-TDI enthält.
In einer neunten Ausführungsform betrifft die Erfindung ein Verfahren gemäß einer der Ausführungsformen 1 bis 8, dadurch gekennzeichnet, dass die Komponente K ausgewählt ist aus mindestens einer Verbindung der folgenden Formeln

$$(R_1)(R_2)X\text{-}C(O)\text{-}(Y)_m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

$$[(R_1)(R_2)X\text{-}R_3\text{-}C(O)\text{-}N(H)\text{-}]_2 \qquad (3)$$

wobei

| | |
|---|---|
| m | für 1 steht, |
| X | für eine Hydroxyphenylgruppe steht, |
| Y | für -N(H)- steht, |
| Z | für H, eine substituierte oder unsubstituierte Arylgruppe oder eine substituierte oder unsubstituierte Heteroarylgruppe steht |
| $R_1$, $R_2$ | jeweils für H, Hydroxyl oder eine substituierte oder unsubstituierte $C_1$- bis $C_6$-Alkylgruppe stehen, |
| $R_3$ | für eine substituierte oder unsubstituierte $C_1$- bis $C_{12}$-Alkylengruppe, eine substituierte oder unsubstituierte $C_1$- bis $C_{12}$-Alkenylengruppe steht. |

In einer zehnten Ausführungsform betrifft die Erfindung ein Verfahren gemäß einer der Ausführungsformen 1 bis 8, dadurch gekennzeichnet, dass die Komponente K ausgewählt ist aus mindestens einer Verbindung der folgenden Formeln

$$(R_1)(R_2)X\text{-}C(O)\text{-}(Y)_m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

wobei

- m für 1 steht,
- X für eine Hydroxyphenylgruppe steht,
- Y für -N(H)- steht,
- Z für H, eine substituierte oder unsubstituierte Arylgruppe oder eine substituierte oder unsubstituierte Heteroarylgruppe steht
- $R_1$, $R_2$ jeweils für H, Hydroxyl oder eine substituierte oder unsubstituierte $C_1$- bis $C_6$-Alkylgruppe stehen,
- $R_3$ für eine substituierte oder unsubstituierte $C_1$- bis $C_{12}$-Alkylengruppe, eine substituierte und/oder unsubstituierte $C_1$- bis $C_{12}$-Alkenylengruppe steht.

In einer elften Ausführungsform betrifft die Erfindung ein Verfahren gemäß einer der Ausführungsformen 1 bis 9, dadurch gekennzeichnet, dass die Komponente K ausgewählt ist aus mindestens einer Verbindung der Gruppe bestehend aus 3-(Salicyloylamino)-1,2,3-triazol, Salicylamid, NN-Dodecandiol-N,N-bis(2-hydroxybenzoyl)hydrazid und 1,2-Bis(3,5-di-tert-butyl-4-hydroxyhydrocinnamyl)hydrazin.

In einer zwölften Ausführungsform betrifft die Erfindung ein Verfahren gemäß einer der Ausführungsformen 1 bis 11, dadurch gekennzeichnet, dass Komponente K in einer Menge von 0,5 bis 6,0 Gew.-Teile, bezogen auf die Summe der Gewichtsteile der Komponenten A1 + A2 = 100 Gewichtsteile, eingesetzt wird.

In einer dreizehnten Ausführungsform betrifft die Erfindung Polyurethanschaumstoffe, erhältlich durch ein Verfahren gemäß einer der Ausführungsformen 1 bis 12.

In einer vierzehnten Ausführungsform betrifft die Erfindung Polyurethanschaumstoffe gemäß der dreizehnten Ausführungsform, wobei es sich um Polyurethan-Weichschaumstoffe handelt.

In einer fünfzehnten Ausführungsform betrifft die Erfindung die Verwendung der Polyurethanschaumstoffe gemäß der dreizehnten oder vierzehnten Ausführungsform zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

In einer sechszehnten Ausführungsform betrifft die Erfindung ein Verfahren gemäß einer der Ausführungsformen 1 bis 8, dadurch gekennzeichnet, dass die Komponente K mindestens eine Verbindung ist ausgewählt aus der Gruppe bestehend aus N,N-Dodecandiol-N,N-bis(2-hydroxybenzoyl)hydrazid, 1,2-Bis(3,5-di-tert-butyl-4-hydroxyhydrocinnamyl)hydrazin und Verbindungen der Formel (1)

$$(R_1)(R_2)X\text{-}C(O)\text{-}(Y)_m\text{-}Z \qquad (1)$$

wobei

- m für 1 steht,
- X für eine Hydroxyphenylgruppe steht,
- Y für -N(H)- steht,
- Z für H, eine substituierte oder unsubstituierte Arylgruppe oder eine substituierte oder unsubstituierte Heteroarylgruppe steht
- $R_1$, $R_2$ jeweils für H, Hydroxyl oder eine substituierte oder unsubstituierte $C_1$- bis $C_6$-Alkylgruppe stehen.

## Beispiele

### Messmethoden

Experimentell bestimmte OH-Zahlen (Hydroxylzahl) wurden gemäß der Vorschrift der DIN 53240-1 (Juni 2013) ermittelt.

### Emissionsbestimmung - cyclisches Propylencarbonat

Die Quantifizierung des cPC-Gehalts erfolgte mittels $^1H$-NMR-Spektroskopie (Firma Bruker, DPX 400, 400 MHz): ca. 24 h nach Herstellung der Polyurethan-Weichschaumstoffe, wurde eine Probe von 1,2-1,5 g des Polyurethan-Weichschaumstoffs bei 60°C für 7,5 Stunden in Aceton per Soxhlet extrahiert. Der Extrakt wurde unter vermindertem Druck konzentriert und in deuteriertem Chloroform, mit Dimethylterephthalat oder 1,2,4-Trichlorbenzol als internen Standard, aufgenommen. Anschließend wurde der cPC-Gehalt per $^1H$-NMR durch den Vergleich mit dem internen Standard quantifiziert.

Die vorliegende Erfindung wird anhand der nachfolgenden Beispiele erläutert, ohne jedoch darauf beschränkt zu sein. Es bedeuten:

| | |
|---|---|
| A1-1: | Polyethercarbonatpolyol, Funktionalität 2,8, OH-Zahl 54 mg KOH/g, 14 Gew.-% $CO_2$, hergestellt durch Copolymerisation von Propylenoxid und Kohlendioxid mit Glycerin und Propylenglykol als H-funktionelle Starterverbindungen in Gegenwart eines Doppelmetallcyanid-Katalysators |
| B1-1: | Niax Catalyst A-1, Handelsprodukt der Firma Momentive Performance Materials GmbH, Bis[2- (N,N'-dimethylamino)ethyl] -basiert |
| B1-2: | Desmorapid SO, Zinnkatalysator (Fa. Covestro AG) |
| B2-1: | Tegostab BF 2370, Handelsprodukt der Firma Evonik Industries |
| C-1: | Wasser |
| D-1: | Desmodur T 80, Mischung von 2,4'-Toluylendiisocyanat und 2,6'-Toluylendiisocyanat im Verhältnis 80/20 (Fa. Covestro AG) |
| K-1: | 3-(Salicyloylamino)-1,2,4-triazole) (Fa. ADEKA Polymer Additives Europe) |
| K-2: | N,N-Dodecanedioyl-N,N-bis(2-hydroxybenzoyl)hydrazide) (Fa. ADEKA Polymer Additives Europe) |
| K-3: | 1,2-Bis(3,5-di-tert-butyl-4-hydroxyhydrocinnamoyl)hydrazine) (Fa. ADEKA Polymer Additives Europe) |
| K-4: | 2,2'-Dihydroxy-4-methoxy-benzophenon (Fa. Sigma-Aldrich) |
| K-5: | Salicylamid (Fa. Sigma Aldrich) |
| Fyrol-PNX: | oligomeres Alkylphosphat (Fa. ICL-IP) |

## Herstellung von Laborweichschaumstoffen:

Die in der Tabelle 1 beschriebenen Polyurethanweichschaumstoffe wurden in einem diskontinuierlichen Verfahren hergestellt. Die Vermischung der Komponenten erfolgte mittels eines Pendraulik Labormischers vom Typ LM 34.

Die Komponente A1-1 (125 g) wurde in einem 500 mL Pappbecher zusammen mit den Komponenten B1-1, B2-1 und C-1 eingewogen und mit einem Schnellrührer 10 Sekunden lang vorvermischt. Anschließend erfolgte die Zugabe der Komponente B1-2 und ein durchmischen von 10 Sekunden bei gleicher Rührgeschwindigkeit. Zu dieser Mischung wurde schließlich die Komponente D-1 zugegeben, 7 Sekunden gemischt und die Mischung in ein vorbereitetes Papierkästchen mit einem Grundriss von 20 cm x 20 cm x 15 cm überführt.

Die Höhe der Polyurethanweichschaumstoffblöcke betrug ca. 14-15 cm. Der fertige Polyurethanweichschaum wurde im Papierkästchen ca. 20-24 Stunden gelagert, bevor dieser zur Ausprüfung in Probekörper gesägt wurde. Die Stauchhärte und die Rohdichte der Polyurethanweichschaumstoffe wurde gemäß DIN EN ISO 3386-1 bestimmt.

Bei der Verwendung einer Komponente K wurde diese zunächst in der Komponente A1-1 vorverrührt, bevor die restlichen Rezepturkomponenten wie oben beschrieben zugegeben wurden.

## Herstellung von Laborkistenweichschaumstoffen

Die in Tabelle 2 beschriebenen Polyurethanweichschaumstoffe wurden in einem diskontinuierlichen Verfahren hergestellt. Hierzu wurde in einem 5 L Eimer die Komponente A1-1 (2000 g) zusammen mit den Komponenten B1-1, B2-1 und C-1 eingewogen und für 20 Sekunden mit einem Schnellrührer vorvermischt. Anschließend erfolgte die Zugabe der Komponente B1-2 und ein Vermischen für 10 Sekunden bei gleicher Geschwindigkeit. Zu dieser Mischung wurde schließlich die Komponente D-1 zugegeben, weitere 7 Sekunden gemischt und die Mischung in ein vorbereitetes Papierkästchen mit einem Grundriss von 50 cm x 50 cm x 50 cm überführt.

Die Höhe der Polyurethanweichschaumstoffblöcke betrug ca. 50-55 cm. Der fertige Polyurethanweichschaum wurde im Papierkästchen ca. 20-24 Stunden gelagert, bevor dieser zur Ausprüfung in Probekörper gesägt wurde. Die Stauchhärte und die Rohdichte der Polyurethanweichschaumstoffe wurde gemäß DIN EN ISO 3386-1 bestimmt.

Bei der Verwendung einer Komponente K wurde diese zunächst in der Komponente A1-1 vorverrührt, bevor die restlichen Rezepturkomponenten wie oben beschrieben zugegeben wurden.

## Ergebnisse

a) Laborweichschaumstoffe (Tabelle 1)

Ohne Komponente K zeigte der resultierende Polyurethanweichschaumstoff eine hohe Emission an cyclischem Propylencarbonat (Vergleichsbeispiel 1), bei Einsatz einer P-O-haltigen Verbindung kann diese Emission verringert werden (Vergleichsbeispiel 2). Überraschenderweise resultiert die Zugabe einer Komponente K jedoch durchgehend in niedrigere Werte für cyclisches Propylencarbonat in der Emissionsbestimmung (Beispiele 3 bis 7) im Vergleich zu den Vergleichsbeispielen 1 und 2.

b) Laborkistenweichschaumstoffe (Tabelle 2)

Ohne Komponente K zeigte der resultierende Polyurethanweichschaumstoff eine hohe Emission an cyclischem Propylencarbonat (Vergleichsbeispiel 8), wobei im Vergleich zum im kleineren Maßstab hergestellten Laborweichschaumstoff (Vergleichsbeispiel 1) ein höheres EmissionsNiveau an cyclischem Propylencarbonat gefunden wird. Bei Einsatz einer P-O-haltigen Verbindung kann diese Emission verringert werden (Vergleichsbeispiel 9). Überraschenderweise resultiert die Zugabe einer erfindungsgemäßen Komponente K jedoch durchgehend in deutlich niedrigere Werte für cyclisches Propylencarbonat in der Emissionsbestimmung (Beispiele 10 bis 12) im Vergleich zu den Vergleichsbeispielen 8 und 9.

Tabelle 1: Laborweichschaumstoff

| KOMPONENTE \ Beispiel | | **1*** | **2*** | **3** | **4** | **5** | **6** | **7** |
|---|---|---|---|---|---|---|---|---|
| A1-1 | [Gew.-Tle.] | 100 | 100 | 100 | 100 | 100 | 100 | 100 |
| B1-1 | [Gew.-Tle.] | 0,12 | 0,12 | 0,12 | 0,12 | 0,12 | 0,12 | 0,12 |
| B1-2 | [Gew.-Tle.] | 0,18 | 0,18 | 0,18 | 0,18 | 0,18 | 0,18 | 0,18 |
| B2-1 | [Gew.-Tle.] | 1,20 | 1,20 | 1,20 | 1,20 | 1,20 | 1,20 | 1,20 |
| C-1 | [Gew.-Tle.] | 4,50 | 4,50 | 4,50 | 4,50 | 4,50 | 4,50 | 4,50 |
| Fyrol-PNX | [Gew.-Tle.] | - | 1,0 | - | - | - | - | - |
| K-1 | [Gew.-Tle.] | - | - | 1,0 | - | - | - | - |
| K-2 | [Gew.-Tle.] | - | - | - | 1,0 | - | - | - |
| K-3 | [Gew.-Tle.] | - | - | - | - | 1,0 | - | - |
| K-4 | [Gew.-Tle.] | - | - | - | - | - | 1,0 | - |
| K-5 | [Gew.-Tle.] | - | - | - | - | - | - | 1,0 |
| D-1 | [Gew.-Tle.] | 56,01 | 56,01 | 56,01 | 56,01 | 56,01 | 56,01 | 56,01 |
| Kennzahl | | 108 | 108 | 108 | 108 | 108 | 108 | 108 |
| Rohdichte | kg $m^{-3}$ | 27,86 | 26,98 | 24,14 | 25,12 | 24,41 | 25,10 | 25.68 |
| Stauchhärte 40 % Kompression (4.Zyklus) | kPa | 5,02 | 7,38 | 5,62 | 5,15 | 4,47 | 5,34 | 5.37 |
| cycl. Propylencarbonat | [mg/kg] | 92 | 23 | 7 | 5 | 10 | 13 | 9 |
| *Vergleichsbeispiel | | | | | | | | |

Tabelle 2: Laborkistenweichschaumstoff

| KOMPONENTE \ Beispiel | | **8*** | **9*** | **10** | **11** | **12** |
|---|---|---|---|---|---|---|
| A1-1 | [Gew.-Tle.] | 2000 | 2000 | 2000 | 2000 | 2000 |
| B1-1 | [Gew.-Tle.] | 2,4 | 2,4 | 2,4 | 2,4 | 2,4 |
| B1-2 | [Gew.-Tle.] | 3,6 | 3,6 | 3,6 | 3,6 | 3,6 |
| B2-2 | [Gew.-Tle.] | 24 | 24 | 24 | 24 | 24 |
| C-1 | [Gew.-Tle.] | 90 | 90 | 90 | 90 | 90 |
| Fyrol-PNX | [Gew.-Tle.] | - | 20 | - | - | - |
| K-1 | [Gew.-Tle.] | - | - | 20 | - | - |
| K-2 | [Gew.-Tle.] | - | - | - | 20 | - |
| K-3 | [Gew.-Tle.] | - | - | - | - | 20 |
| D-1 | [Gew.-Tle.] | 1120 | 1120 | 1126 | 1125 | 1122 |

(fortgesetzt)

| KOMPONENTE \ Beispiel | | **8*** | **9*** | **10** | **11** | **12** |
|---|---|---|---|---|---|---|
| Kennzahl | | 108 | 108 | 108 | 108 | 108 |
| Rohdichte | kg $m^{-3}$ | 22,8 | 22,8 | 22,5 | 22,9 | 23,0 |
| Stauchhärte 40 % Kompression (4.Zklus) | kPa | 4,33 | 4,47 | 4,10 | 4,10 | 3,10 |
| cycl. Propylencarbonat | [mg/kg] | 562 | 251 | 32 | 21 | 76 |
| *Vergleichsbeispiel | | | | | | |

**Patentansprüche**

1. Verfahren zur Herstellung von Polyurethanschaumstoffen durch Umsetzung der Komponenten

A Polyolkomponente, enthaltend

A1 40 bis 100 Gew.-Teile Polyethercarbonatpolyol mit einer Hydroxylzahl gemäß DIN 53240-1 von Juni 2013 von 20 mg KOH/g bis 120 mg KOH/g
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,

B

B1 Katalysator, und
B2 gegebenenfalls Hilfs- und Zusatzstoffe,

C Wasser und/oder physikalische Treibmittel,
mit
D Di- und/oder Polyisocyanaten,

wobei die Herstellung bei einer Kennzahl von 90 bis 120 und in Gegenwart einer Komponente K erfolgt, **dadurch gekennzeichnet, dass** die Komponente K ausgewählt ist aus mindestens einer Verbindung der folgenden Formeln

$(R_1)(R_2)X\text{-}C(O)\text{-}(Y)_m\text{-}Z$ (1)

$[(R)(R_2)X\text{-}C(O)\text{-}N(H)\text{-}N(H)\text{-}C(O)\text{-}R_3\text{-}]_2$ (2)

$[(R_1)(R_2)X\text{-}R_3\text{-}C(O)\text{-}N(H)\text{-}]_2$ (3)

wobei

m für 0 oder 1 steht,
X für eine Hydroxyphenylgruppe steht,
Y für -N(H)-, -O-, -O-$R_4$- oder $C_1$- bis $C_6$-Alkylen steht,
Z für H, eine substituierte oder unsubstituierte Arylgruppe oder eine substituierte oder unsubstituierte Heteroarylgruppe steht, wobei Z nicht für H steht wenn Y für-O- steht,
$R_1$, $R_2$ jeweils für H, Hydroxyl, eine substituierte oder unsubstituierte $C_1$- bis $C_6$-Alkylgruppe oder -O-$R_5$ stehen,
$R_3$ für eine substituierte oder unsubstituierte $C_1$- bis $C_{12}$-Alkylengruppe, eine substituierte oder unsubstituierte $C_1$- bis $C_{12}$-Alkenylengruppe steht,
$R_4$ für eine substituierte oder unsubstituierte $C_1$- bis $C_6$-Alkylengruppe steht,
$R_5$ für eine substituierte oder unsubstituierte $C_1$- bis $C_{12}$-Alkylgruppe steht,

und die Komponente K in einer Menge von 0,05 bis 10,00 Gew.-Teile eingesetzt wird, bezogen auf die Summe der

Gewichtsteile der Komponenten A1 + A2 = 100 Gewichtsteile.

**2.** Verfahren gemäß Anspruch 1, **dadurch gekennzeichnet, dass** Komponente A die folgende Zusammensetzung aufweist:

A1 40 bis 100 Gew.-Teile Polyethercarbonatpolyol mit einer Hydroxylzahl gemäß DIN 53240-1 von Juni 2013 von 20 mg KOH/g bis 120 mg KOH/g,
A2 0 bis 60 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist,
A3 0 bis 20 Gew.-Teile, bezogen auf die Summe der Gew.-Teile der Komponenten A1 und A2, Polyetherpolyol mit einer Hydroxylzahl gemäß DIN 53240-1 von Juni 2013 20 mg KOH/g bis 250 mg KOH/g, und einem Gehalt an Ethylenoxid von > 60 Gew.-%, wobei Polyetherpolyol A3 frei von Carbonateinheiten ist,
A4 0 bis 40 Gew.-Teile, bezogen auf die Summe der Gew.-Teile der Komponenten A1 und A2, Polymerpolyol, PHD-Polyol und/oder PIPA-Polyol,
A5 40 bis 0 Gew.-Teile, bezogen auf die Summe der Gew.-Teile der Komponenten A1 und A2, Polyol, welches nicht unter die Definition der Komponenten A1 bis A4 fällt,

wobei die Angabe der Gewichtsteile der Komponenten A3, A4 und A5 jeweils bezogen sind auf die Summe der Gewichtsteile der Komponenten A1 + A2 = 100 Gewichtsteile.

**3.** Verfahren gemäß Anspruch 1 oder 2, **dadurch gekennzeichnet, dass** Komponente A frei ist von Komponenten A3 und/oder A4.

**4.** Verfahren gemäß einem der Ansprüche 1 bis 3, **dadurch gekennzeichnet, dass** Komponente A umfasst:

A1 65 bis 75 Gew.-Teile Polyethercarbonatpolyol mit einer Hydroxylzahl gemäß DIN 53240-1 von Juni 2013 von 20 mg KOH/g bis 120 mg KOH/g, und
A2 25 bis 35 Gew.-Teile Polyetherpolyol mit einer Hydroxylzahl gemäß DIN 53240-1 von Juni 2013 von 20 mg KOH/g bis 250 mg KOH/g und einem Gehalt an Ethylenoxid von 0 bis 60 Gew.-%, wobei Polyetherpolyol A2 frei von Carbonateinheiten ist.

**5.** Verfahren gemäß einem der Ansprüche 1 bis 4, **dadurch gekennzeichnet, dass** Komponente A1 ein Polyethercarbonatpolyol umfasst, welches erhältlich ist durch Copolymerisation von Kohlendioxid und Alkylenoxid in Gegenwart H-funktioneller Startermoleküle, wobei das Polyethercarbonatpolyol vorzugsweise einen $CO_2$-Gehalt von 15 bis 25 Gew.-% aufweist.

**6.** Verfahren gemäß einem der Ansprüche 1 bis 5, **dadurch gekennzeichnet, dass** als Komponente B

B1 Katalysator ausgewählt aus einem oder mehreren der folgenden Verbindungen

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe

eingesetzt werden.

**7.** Verfahren gemäß einem der Ansprüche 1 bis 5, **dadurch gekennzeichnet, dass** als Komponente B

B1 Katalysator und
B2 gegebenenfalls Hilfs- und Zusatzstoffe

eingesetzt werden,
wobei als Komponente B1

B1.1 0,05 bis 1,50 Gew.-Teilen, bezogen auf die Summe der Gew.-Teile der Komponenten A1 und A2, Harnstoff und/oder Derivate des Harnstoffs und
B1.2 0,03 bis 1,50 Gew.-Teilen, bezogen auf die Summe der Gew.-Teile der Komponenten A1 und A2, anderer Katalysator als die der Komponente B1.2, wobei der Gehalt an aminischen Katalysator in der Komponente B1.2 maximal 50 Gew.-% bezogen auf Komponente B1 betragen darf,

eingesetzt wird.

**8.** Verfahren gemäß einem der Ansprüche 1 bis 7, **dadurch gekennzeichnet, dass** Komponente D 2,4- und/oder 2,6-TDI enthält.

**9.** Verfahren gemäß einem der Ansprüche 1 bis 8, **dadurch gekennzeichnet, dass** die Komponente K ausgewählt ist aus mindestens einer Verbindung der folgenden Formeln

$(R_1)(R_2)X\text{-}C(O)\text{-}(Y)_m\text{-}Z$ (1)

$[(R_1)(R_2)X\text{-}C(O)\text{-}N(H)\text{-}N(H)\text{-}C(O)\text{-}R_3\text{-}]_2$ (2)

$[(R_1)(R_2)X\text{-}R_3\text{-}C(O)\text{-}N(H)\text{-}]_2$ (3)

wobei

m für 1 steht,
X für eine Hydroxyphenylgruppe steht,
Y für -N(H)- steht,
Z für H, eine substituierte oder unsubstituierte Arylgruppe oder eine substituierte oder unsubstituierte Heteroarylgruppe steht
$R_1$, $R_2$ jeweils für H, Hydroxyl oder eine substituierte oder unsubstituierte $C_1$- bis $C_6$-Alkylgruppe stehen,
$R_3$ für eine substituierte oder unsubstituierte $C_1$- bis $C_{12}$-Alkylengruppe, eine substituierte oder unsubstituierte $C_1$- bis $C_{12}$-Alkenylengruppe steht.

**10.** Verfahren gemäß einem der Ansprüche 1 bis 8, **dadurch gekennzeichnet, dass** die Komponente K ausgewählt ist aus mindestens einer Verbindung der folgenden Formeln

$(R_1)(R_2)X\text{-}C(O)\text{-}(Y)_m\text{-}Z$ (1)

$[(R_1)(R_2)X\text{-}C(O)\text{-}N(H)\text{-}N(H)\text{-}C(O)\text{-}R_3\text{-}]_2$ (2)

wobei

m für 1 steht,
X für eine Hydroxyphenylgruppe steht,
Y für -N(H)- steht,
Z für H, eine substituierte oder unsubstituierte Arylgruppe oder eine substituierte oder unsubstituierte Heteroarylgruppe steht
$R_1$, $R_2$ jeweils für H, Hydroxyl oder eine substituierte oder unsubstituierte $C_1$- bis $C_6$-Alkylgruppe stehen,
$R_3$ für eine substituierte oder unsubstituierte $C_1$- bis $C_{12}$-Alkylengruppe, eine substituierte und/oder unsubstituierte $C_1$- bis $C_{12}$-Alkenylengruppe steht.

**11.** Verfahren gemäß einem der Ansprüche 1 bis 9, **dadurch gekennzeichnet, dass** die Komponente K ausgewählt ist aus mindestens einer Verbindung der Gruppe bestehend aus 3-(Salicyloylamino)-1,2,3-triazol, Salicylamid, N,N-Dodecandiol-N,N-bis(2-hydroxybenzoyl)hydrazid und 1,2-Bis(3,5-di-tert-butyl-4-hydroxyhydrocinnamyl)hydrazin.

**12.** Verfahren gemäß einem der Ansprüche 1 bis 11, **dadurch gekennzeichnet, dass** Komponente K in einer Menge von 0,5 bis 6,0 Gew.-Teile, bezogen auf die Summe der Gewichtsteile der Komponenten A1 + A2 = 100 Gewichtsteile, eingesetzt wird.

**13.** Polyurethanschaumstoffe, erhältlich durch ein Verfahren gemäß einem der Ansprüche 1 bis 12.

**14.** Polyurethanschaumstoffe gemäß Anspruch 13, wobei es sich um Polyurethan-Weichschaumstoffe handelt.

**15.** Verwendung der Polyurethanschaumstoffe gemäß Anspruch 13 oder 14 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

## Claims

**1.** Process for producing polyurethane foams by reaction of the components

A polyol component comprising

A1 from 40 to 100 parts by weight of polyether carbonate polyol having a hydroxyl number in accordance with DIN 53240-1 of June 2013 of from 20 mg KOH/g to 120 mg KOH/g,
A2 from 0 to 60 parts by weight of polyether polyol having a hydroxyl number in accordance with DIN 53240-1 of June 2013 of from 20 mg KOH/g to 250 mg KOH/g and a content of ethylene oxide of from 0 to 60% by weight, with polyether polyol A2 being free of carbonate units,

B

B1 catalyst, and
B2 optionally auxiliaries and additives,

C water and/or physical blowing agents,
with
D diisocyanates and/or polyisocyanates,

where the production reaction is carried out at an index of from 90 to 120 and in the presence of a component K, **characterized in that** the component K is selected from at least one compound of the following formulae

$(R_1)(R_2)X\text{-}C(O)\text{-}(Y)_m\text{-}Z$ (1)

$[(R_1)(R_2)X\text{-}C(O)\text{-}N(H)\text{-}N(H)\text{-}C(O)\text{-}R_3\text{-}]_2$ (2)

$[(R_1)(R_2)X\text{-}R_3\text{-}C(O)\text{-}N(H)\text{-}]_2$ (3)

where

m is 0 or 1,
X is a hydroxyphenyl group,
Y is -N(H)-, -0-, -O-$R_4$- or $C_1$- to $C_6$-alkylene,
Z is H, a substituted or unsubstituted aryl group or a substituted or unsubstituted heteroaryl group, where Z is not H when Y is -0-,
$R_1$, $R_2$ are each H, hydroxyl, a substituted or unsubstituted $C_1$- to $C_6$-alkyl group or-O-$R_5$,
$R_3$ is a substituted or unsubstituted $C_1$- to $C_{12}$-alkylene group, a substituted or unsubstituted $C_1$- to $C_{12}$-alkenylene group,
$R_4$ is a substituted or unsubstituted $C_1$- to $C_6$-alkylene group,
$R_5$ is a substituted or unsubstituted $C_1$- to $C_{12}$-alkyl group, and the component K is used in an amount of 0.05 to 10.00 parts by weight, based on the sum of the parts by weight of the components A1 + A2 = 100 parts by weight.

**2.** Process according to Claim 1, **characterized in that** component A has the following composition:

A1 from 40 to 100 parts by weight of polyether carbonate polyol having a hydroxyl number in accordance with DIN 53240-1 of June 2013 of from 20 mg KOH/g to 120 mg KOH/g,
A2 from 0 to 60 parts by weight of polyether polyol having a hydroxyl number in accordance with DIN 53240-1 of June 2013 of from 20 mg KOH/g to 250 mg KOH/g and a content of ethylene oxide of from 0 to 60% by weight, with polyether polyol A2 being free of carbonate units,

A3 from 0 to 20 parts by weight, based on the sum of the parts by weight of the components A1 and A2, of polyether polyol having a hydroxyl number in accordance with DIN 53240-1 of June 2013 of from 20 mg KOH/g to 250 mg KOH/g and a content of ethylene oxide of > 60% by weight, with polyether polyol A3 being free of carbonate units,
A4 from 0 to 40 parts by weight, based on the sum of the parts by weight of the components A1 and A2, of polymer polyol, PUD polyol and/or PIPA polyol, A5 from 40 to 0 parts by weight, based on the sum of the parts by weight of the components A1 and A2, of polyol which does not come under the definition of the components A1 to A4,

where the parts by weight figures for the components A3, A4 and A5 are in each case based on the sum of the parts by weight of components A1 + A2 = 100 parts by weight.

**3.** Process according to Claim 1 or 2, **characterized in that** component A is free of components A3 and/or A4.

**4.** Process according to any of Claims 1 to 3, **characterized in that** component A comprises:

A1 from 65 to 75 parts by weight of polyether carbonate polyol having a hydroxyl number in accordance with DIN 53240-1 of June 2013 of from 20 mg KOH/g to 120 mg KOH/g, and
A2 from 25 to 35 parts by weight of polyether polyol having a hydroxyl number in accordance with DIN 53240-1 of June 2013 of from 20 mg KOH/g to 250 mg KOH/g and a content of ethylene oxide of from 0 to 60% by weight, where polyether polyol A2 is free of carbonate units.

**5.** Process according to any of Claims 1 to 4, **characterized in that** component A1 comprises a polyether carbonate polyol obtainable by copolymerization of carbon dioxide and alkylene oxide in the presence of H-functional starter molecules, where the polyether carbonate polyol preferably has a $CO_2$ content of from 15 to 25% by weight.

**6.** Process according to any of Claims 1 to 5, **characterized in that**

B1 catalyst selected from one or more of the following compounds

a) aliphatic tertiary amines, cycloaliphatic tertiary amines, aliphatic amino ethers, cycloaliphatic amino ethers, aliphatic amidines, cycloaliphatic amidines, urea and derivatives of urea and/or
b) tin(II) salts of carboxylic acids and

B2 optionally auxiliaries and additives are used as component B.

**7.** Process according to any of Claims 1 to 5, **characterized in that**

B1 catalyst and
B2 optionally auxiliaries and additives are used as component B,
where
B1.1 from 0.05 to 1.50 parts by weight, based on the sum of the parts by weight of the components A1 and A2, of urea and/or derivatives of urea and
B1.2 from 0.03 to 1.50 parts by weight, based on the sum of the parts by weight of the components A1 and A2, of catalyst other than those of the component B1.2, with the content of amine catalyst in the component B1.2 being not more than 50% by weight based on component B1,

are used as component B1.

**8.** Process according to any of Claims 1 to 7, **characterized in that** component D comprises 2,4- and/or 2,6-TDI.

**9.** Process according to any of Claims 1 to 8, **characterized in that** the component K is selected from at least one compound of the following formulae

$$(R_1)(R_2)X\text{-}C(O)\text{-}(Y)_m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

$$[(R_1)(R_2)X\text{-}R_3\text{-}C(O)\text{-}N(H)\text{-}]_2 \qquad (3)$$

where

m is 1,
X is a hydroxyphenyl group,
Y is -N(H)-,
Z is H, a substituted or unsubstituted aryl group or a substituted or unsubstituted heteroaryl group,
$R_1$, $R_2$ are each H, hydroxyl or a substituted or unsubstituted $C_1$- to $C_6$-alkyl group,
$R_3$ is a substituted or unsubstituted $C_1$- to $C_{12}$-alkylene group, a substituted or unsubstituted $C_1$- to $C_{12}$-alkenylene group.

**10.** Process according to any of Claims 1 to 8, **characterized in that** the component K is selected from at least one compound of the following formulae

$$(R_1)(R_2)X\text{-}C(O)\text{-}(Y)m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

where

m is 1,
X is a hydroxyphenyl group,
Y is -N(H)-,
Z is H, a substituted or unsubstituted aryl group or a substituted or unsubstituted heteroaryl group,
$R_1$, $R_2$ are each H, hydroxyl or a substituted or unsubstituted $C_1$- to $C_6$-alkyl group,
$R_3$ is a substituted or unsubstituted $C_1$- to $C_{12}$-alkylene group, a substituted and/or unsubstituted $C_1$- to $C_{12}$-alkenylene group.

**11.** Process according to any of Claims 1 to 9, **characterized in that** the component K is selected from at least one compound from the group consisting of 3-(salicyloylamino)-1,2,3-triazole, salicylamide, N,N-dodecandiol-N,N-bis(2-hydroxybenzoyl)hydrazide and 1,2-bis(3,5-di-tert-butyl-4-hydroxyhydrocinnamyl)hydrazine.

**12.** Process according to any of Claims 1 to 11, **characterized in that** component K is used in an amount of from 0.5 to 6.0 parts by weight, based on the sum of the parts by weight of the components A1 + A2 = 100 parts by weight.

**13.** Polyurethane foams obtainable by a process according to any of Claims 1 to 12.

**14.** Polyurethane foams according to Claim 13, wherein the polyurethane foams are flexible polyurethane foams.

**15.** Use of the polyurethane foams according to Claim 13 or 14 for producing furniture upholstery, textile inserts, mattresses, automobile seats, headrests, armrests, sponges, foam sheets for use in automobile components such as roof liners, door trim, seat cushions and components.

**Revendications**

**1.** Procédé pour la préparation de mousses de polyuréthane par transformation des composants

A un composant de type polyol, contenant

A1 40 à 100 parties en poids d'un polyéthercarbonatepolyol doté d'un indice d'hydroxyle selon la norme DIN 53240-1 de juin 2013 de 20 mg de KOH/g à 120 mg de KOH/g
A2 0 à 60 parties en poids d'un polyétherpolyol doté d'un indice d'hydroxyle selon la norme DIN 53240-1 de juin 2013 de 20 mg de KOH/g à 250 mg de KOH/g et d'une teneur en oxyde d'éthylène de 0 à 60 % en poids, le polyétherpolyol A2 étant exempt de motifs de type carbonate,

B

B1 un catalyseur, et
B2 éventuellement des auxiliaires et des additifs

C de l'eau et/ou un agent gonflant chimique,
avec
D des diisocyanates et/ou polyisocyanates,

la préparation étant réalisée à un indice de 90 à 120 et en présence d'un composant K,

**caractérisé en ce que** le composant K est choisi parmi au moins un composé des formules suivantes

$(R_1)(R_2)X\text{-}C(O)\text{-}(Y)_m\text{-}Z$ (1)

$[(R_1)(R_2)X\text{-}C(O)\text{-}N(H)\text{-}N(H)\text{-}C(O)\text{-}R_3\text{-}]_2$ (2)

$[(R_1)(R_2)X\text{-}R_3\text{-}C(O)\text{-}N(H)\text{-}]_2$ (3)

m représentant 0 ou 1,
X représentant un groupe hydroxyphényle,
Y représentant -N(H)-, -O-, $-O-R_4-$ ou $C_1$-$C_6$-alkylène,
Z représentant H, un groupe aryle substitué ou non substitué ou un groupe hétéroaryle substitué ou non substitué,
Z ne représentant pas H lorsque Y représente -0-,
$R_1$, $R_2$ représentant à chaque fois H, hydroxyle, un groupe $C_1$-$C_6$-alkyle substitué ou non substitué ou $-O-R_5$,
$R_3$ représentant un groupe $C_1$-$C_{12}$-alkylène substitué ou non substitué, un groupe $C_1$-$C_{12}$-alcénylène substitué ou non substitué,
$R_4$ représentant un groupe $C_1$-$C_6$-alkylène substitué ou non substitué,
$R_5$ représentant un groupe $C_1$-$C_{12}$-alkyle substitué ou non substitué,
et le composant K étant utilisé en une quantité de 0,05 to 10,00 parties en poids, sur la base de la somme des parties en poids des composants A1 + A2 = 100 parties en poids.

2. Procédé selon la revendication 1, **caractérisé en ce que** le composant A présente la composition suivante

A1 40 à 100 parties en poids d'un polyéthercarbonatepolyol doté d'un indice d'hydroxyle selon la norme DIN 53240-1 de juin 2013 de 20 mg de KOH/g à 120 mg de KOH/g
A2 0 à 60 parties en poids d'un polyétherpolyol doté d'un indice d'hydroxyle selon la norme DIN 53240-1 de juin 2013 de 20 mg de KOH/g à 250 mg de KOH/g et d'une teneur en oxyde d'éthylène de 0 à 60 % en poids, le polyétherpolyol A2 étant exempt de motifs de type carbonate,
A3 0 à 20 parties en poids, par rapport à la somme des parties en poids des composants A1 et A2, d'un polyétherpolyol doté d'un indice d'hydroxyle selon la norme DIN 53240-1 de juin 2013 de 20 mg de KOH/g à 250 mg de KOH/g et d'une teneur en oxyde d'éthylène > 60 % en poids, le polyétherpolyol A3 étant exempt de motifs de type carbonate,
A4 0 à 40 parties en poids, par rapport à la somme des parties en poids des composants A1 et A2, d'un polyol polymérique, d'un PHD-polyol et/ou d'un PIPA-polyol,
A5 40 à 0 parties en poids, par rapport à la somme des parties en poids des composants A1 et A2, d'un polyol qui ne correspond pas à la définition des composants A1 à A4,
les données des parties en poids des composants A3, A4 et A5 se rapportant à chaque fois à la somme des parties en poids des composants A1 + A2 = 100 parties en poids.

3. Procédé selon la revendication 1 ou 2, **caractérisé en ce que** le composant A est exempt de composants A3 et/ou A4.

4. Procédé selon l'une quelconque des revendications 1 à 3, **caractérisé en ce que** le composant A comprend

A1 65 à 75 parties en poids d'un polyéthercarbonatepolyol doté d'un indice d'hydroxyle selon la norme DIN 53240-1 de juin 2013 de 20 mg de KOH/g à 120 mg de KOH/g, et
A2 25 à 35 parties en poids d'un polyétherpolyol doté d'un indice d'hydroxyle selon la norme DIN 53240-1 de juin 2013 de 20 mg de KOH/g à 250 mg de KOH/g et d'une teneur en oxyde d'éthylène de 0 à 60 % en poids, le polyétherpolyol A2 étant exempt de motifs de type carbonate.

**5.** Procédé selon l'une quelconque des revendications 1 à 4, **caractérisé en ce que** le composant A1 comprend un polyéthercarbonatepolyol qui peut être obtenu par copolymérisation de dioxyde de carbone et d'oxyde d'alkylène en présence de molécules de départ fonctionnalisées par H, le polyéthercarbonatepolyol présentant de préférence une teneur en $CO_2$ de 15 à 25 % en poids.

**6.** Procédé selon l'une quelconque des revendications 1 à 5, **caractérisé en ce que**

B1 un catalyseur choisi parmi un ou plusieurs parmi les composés suivants

a) des amines tertiaires aliphatiques, des amines tertiaires cycloaliphatiques, des aminoéthers aliphatiques, des aminoéthers cycloaliphatiques, des amidines aliphatiques, des amidines cycloaliphatiques, l'urée et des dérivés de l'urée et/ou
b) des sels d'étain(II) d'acides carboxyliques, et

B2 éventuellement des auxiliaires et des additifs sont utilisés en tant que composant B.

**7.** Procédé selon l'une quelconque des revendications 1 à 5, **caractérisé en ce que**

B1 un catalyseur et
B2 éventuellement des auxiliaires et des additifs sont utilisés en tant que composant B,
dans lequel
B1.1 0,05 à 1,50 parties en poids, par rapport à la somme des parties en poids des composants A1 et A2, d'urée et/ou de dérivés de l'urée et
B1.2 0,03 à 1,50 parties en poids, par rapport à la somme des parties en poids des composants A1 et A2, d'un autre catalyseur que ceux du composant B1.2, la teneur en catalyseur aminique dans le composant B1.2 pouvant être au maximum de 50 % en poids par rapport au composant B1,

sont utilisés en tant que composant B1.

**8.** Procédé selon l'une quelconque des revendications 1 à 7, **caractérisé en ce que** le composant D contient 2,4-TDI et/ou 2,6-TDI.

**9.** Procédé selon l'une quelconque des revendications 1 à 8, **caractérisé en ce que** le composant K est choisi parmi au moins un composé des formules suivantes

$$(R_1)(R_2)X\text{-}C(O)\text{-}(Y)_m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

$$[(R_1)(R_2)X\text{-}R_3\text{-}(O)\text{-}N(H)\text{-}]_2 \qquad (3)$$

m représentant 1,
X représentant un groupe hydroxyphényle,
Y représentant -N(H)-,
Z représentant H, un groupe aryle substitué ou non substitué ou un groupe hétéroaryle substitué ou non substitué,
$R_1$, $R_2$ représentant à chaque fois H, hydroxyle ou un groupe $C_1$-$C_6$-alkyle substitué ou non substitué, $R_3$ représentant un groupe $C_1$-$C_{12}$-alkylène substitué ou non substitué, un groupe $C_1$-$C_{12}$-alcénylène substitué ou non substitué.

**10.** Procédé selon l'une quelconque des revendications 1 à 8, **caractérisé en ce que** le composant K est choisi parmi au moins un composé des formules suivantes

$$(R_1)(R_2)X\text{-}C(O)\text{-}(Y)_m\text{-}Z \qquad (1)$$

$$[(R_1)(R_2)X\text{-}C(O)\text{-}N(H)\text{-}N(H)\text{-}C(O)\text{-}R_3\text{-}]_2 \qquad (2)$$

m représentant 1,
X représentant un groupe hydroxyphényle,

Y représentant -N(H)-,
Z représentant H, un groupe aryle substitué ou non substitué ou un groupe hétéroaryle substitué ou non substitué, $R_1$, $R_2$ représentant à chaque fois H, hydroxyle ou un groupe $C_1$-$C_6$-alkyle substitué ou non substitué, $R_3$ représentant un groupe $C_1$-$C_{12}$-alkylène substitué ou non substitué, un groupe $C_1$-$C_{12}$-alcénylène substitué et/ou non substitué.

**11.** Procédé selon l'une quelconque des revendications 1 à 9, **caractérisé en ce que** le composant K est choisi parmi au moins un composé du groupe constitué par 3-(salicyloylamino)-1,2,3-triazole, salicylamide, N,N-dodécandiol-N,N-bis(2-hydroxybenzoyl)hydrazide et 1,2-bis(3,5-di-tert-butyl-4-hydroxyhydrocinnamyl)hydrazine.

**12.** Procédé selon l'une quelconque des revendications 1 à 11, **caractérisé en ce que** le composant K est utilisé en une quantité de 0,5 à 6,0 parties en poids, par rapport à la somme des parties en poids des composants A1 + A2 = 100 parties en poids.

**13.** Mousses de polyuréthane, pouvant être obtenues par un procédé selon l'une quelconque des revendications 1 à 12.

**14.** Mousses de polyuréthane selon la revendication 13, qui sont des mousses souples de polyuréthane.

**15.** Utilisation de mousses de polyuréthane selon la revendication 13 ou 14 pour la préparation de rembourrages de meubles, de carcasses textiles, de matelas, de sièges automobiles, d'appuis-tête, d'accoudoirs, d'épongés, de feuilles de mousse pour une utilisation dans des pièces automobiles comme par exemple des garnitures de plafond, des habillages de portes latérales, des coussins de sièges et des éléments de construction.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2012130760 A1
- EP 0222453 A
- WO 2017097729 A1
- EP 1359177 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0176013 A
- EP 0000389 A
- EP 0007502 A
- EP 355000 A

### In der Beschreibung aufgeführte Nicht-Patentliteratur

- **B. INOUE et al.** Copolymerization of Carbon Dioxide and Epoxide with Organometallic Compounds. *Die Makromolekulare Chemie,* 1969, vol. 130, 210-220
- **G. OERTEL.** Kunststoff-Handbuch. Carl-Hanser-Verlag, 1993, vol. VII, 104-127
- **W. SIEFKEN.** *Justus Liebigs Annalen der Chemie,* vol. 562, 75-136
- **VIEWEG ; HÖCHTLEN.** Kunststoff-Handbuch. Carl-Hanser-Verlag, 1993, vol. VII, 139-265